# FASCICULE DE BREVET EUROPEEN

(11) **EP 0 359 678 B1**
(45) Date de publication et mention de la délivrance du brevet: **05.01.1994**
(21) Numéro de dépôt: 89420325.6
(22) Date de dépôt: 06.09.1989
(51) Int. Cl.: H01R 9/26, H02B 1/20

(54) **Dispositif de raccordement par peigne de pontage d'appareils électriques modulaires, et procédé de fabrication d'un tel peigne**
Einrichtung zur Verbindung von modulären elektrischen Geräten durch Überbrückungskamm und Herstellungsverfahren eines solchen Kammes
Bridging comb junction appliance for modular electrical devices, and process for manufacturing such a comb

(30) Priorité: 16.09.1988 FR 8812232
(43) Date de publication de la demande: 21.03.1990
(73) Titulaire: MERLIN GERIN, F-38240 Meylan (FR)
(72) Inventeur: Pellicano, Joseph, F 38050 Grenoble Cedex (FR)
(74) Mandataire: Hecké, Gérard

(56) Documents cités:
- EP-A- 0 071 156
- FR-A- 2 437 715

## Description

L'invention est relative à un dispositif de raccordement pour des appareils électriques modulaires disposés côte-à-côte selon une rangée sur un rail support profilé et ayant une série de bornes d'entrée latérales échelonnées suivant la direction longitudinale de la rangée, ledit dispositif de raccordement comportant :
- un peigne de pontage ayant une gaine profilée en matériau isolant renfermant au moins une barre conductrice de section rectangulaire, parallèle au rail support et équipée d'une pluralité de languettes de sections rectangulaires en forme de dents, s'étendant parallèlement dans un même plan avec un décalage longitudinal prédéterminé, et susceptibles de coopérer avec la série de bornes d'entrée,
- et des moyens de raccordement aux appareils électriques modulaires et au peigne de pontage des appareils.

Les moyens de raccordement sont généralement constitués par des connecteurs ou des câbles branchés dans des bornes d'entrée des appareils. Il en résulte un raccordement mixte par peigne et conducteurs qui nécessite des bornes d'entrée à cages spéciales, telles que mentionnées dans les brevets FR 2.612.340 et EP 59.939. Dans ces dispositifs de raccordement connus, le peigne est unipolaire et est séparé du conducteur adjacent par un intervalle prédéterminé s'étendant le long d'une face latérale étroite dans le sens de la profondeur des appareils. L'adaptation à ce type de bornes d'un peigne multipolaire à gaine isolante profilée, décrit par exemple dans le modèle d'utilité allemand DE 8414678 U, pose alors un probléme d'encombrement dans la zone de raccordement.

L'objet de l'invention consiste à simplifier la réalisation du raccordement mixte multipolaire d'appareils modulaires.

Le dispositif de raccordement selon l'invention est caractérisé en ce que la gaine isolante du peigne est pourvue d'une pluralité d'orifices situés à intervalles réguliers le long de la direction longitudinale en face des bornes d'entrée, et que le plan des languettes passe au voisinage de l'un des bords des orifices pour ménager un espace libre autorisant le passage des moyens de raccordement à travers la gaine, et la liaison électrique commune avec les languettes du peigne à l'intérieur des bornes d'entrée correspondantes. Les moyens de raccordement sont ainsi portés directement par le peigne. Il en résulte que l'encombrement dans le sens de la hauteur des faces latérales étroites des appareils n'est pas modifié.

Les orifices sont conformés avantageusement à partir de prédécoupes brisables, pratiquées dans la face supérieure de la gaine, perpendiculaire aux languettes.

L'intervalle entre deux prédécoupes successives de la gaine correspond sensiblement au pas d'appareils unipolaires. En fonction de la zone de branchement des moyens de raccordement sur le peigne, et du type d'appareils unipolaires, bipolaires, tripolaires ou tétrapolaires, il suffit de briser des prédécoupes prédéterminées de la gaine pour obtenir les orifices d'introduction.

Les moyens de raccordement peuvent être directs par câbles ou indirects par connecteurs.

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue en élévation d'une rangée d'appareils électriques modulaires encliquetés sur un rail support et alimentés par un dispositif de raccordement mixte selon l'invention;
- la figure 2 montre une vue en coupe d'un appareil selon la ligne I-I de la figure 1;
- la figure 3 représente une vue en coupe du peigne multipolaire de la figure 2;
- la figure 4 est une vue schématique en plan de la gaine équipée de prédécoupes;
- la figure 5 est une vue en plan de la fig. 3;
- la figure 6 montre une vue identique à celle de la figure 2, lors de la mise en place du connecteur sur le peigne;
- les figures 7 et 8 représentent des vues partielles de la figure 2, de deux variantes de raccordement;
- les figures 9 à 12 montrent des vues en plan d'une bande de cuivre prédécoupée, respectivement pour un peigne bipolaire, tripolaire et tétrapolaire;
- la figure 13 est une vue en perspective d'une barre à différents stades de pliage des languettes.

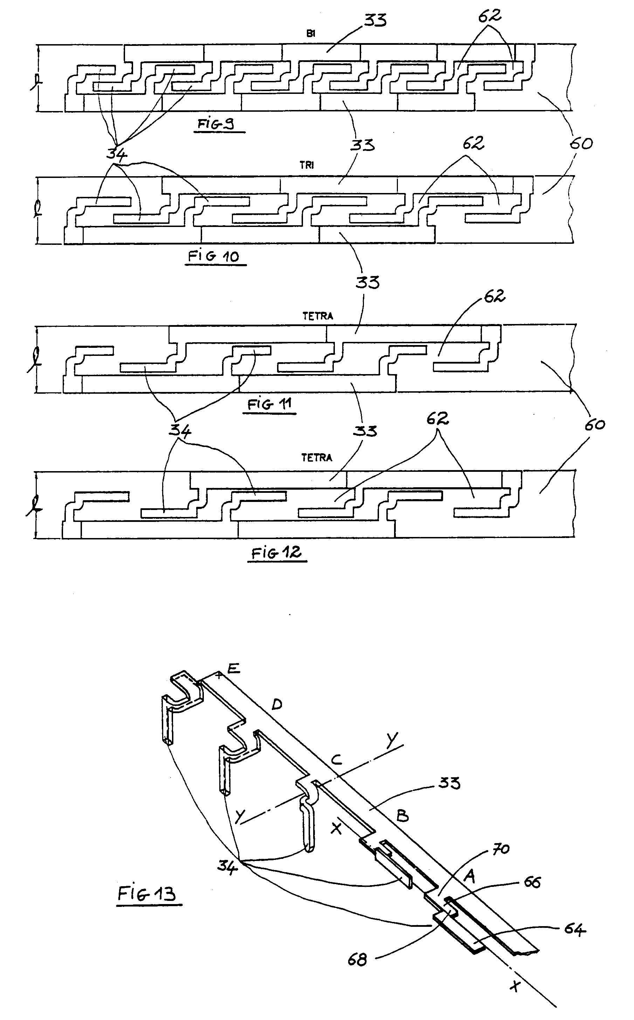

Les figures 9 à 13 et les explications s'y rapportant ne sont données qu'à titre proiement informatif

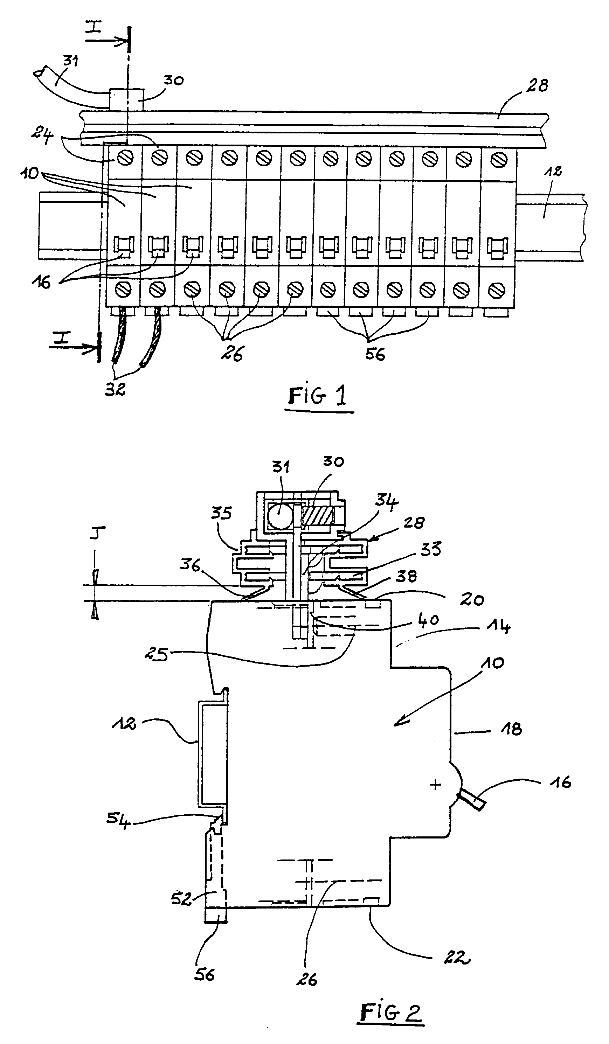

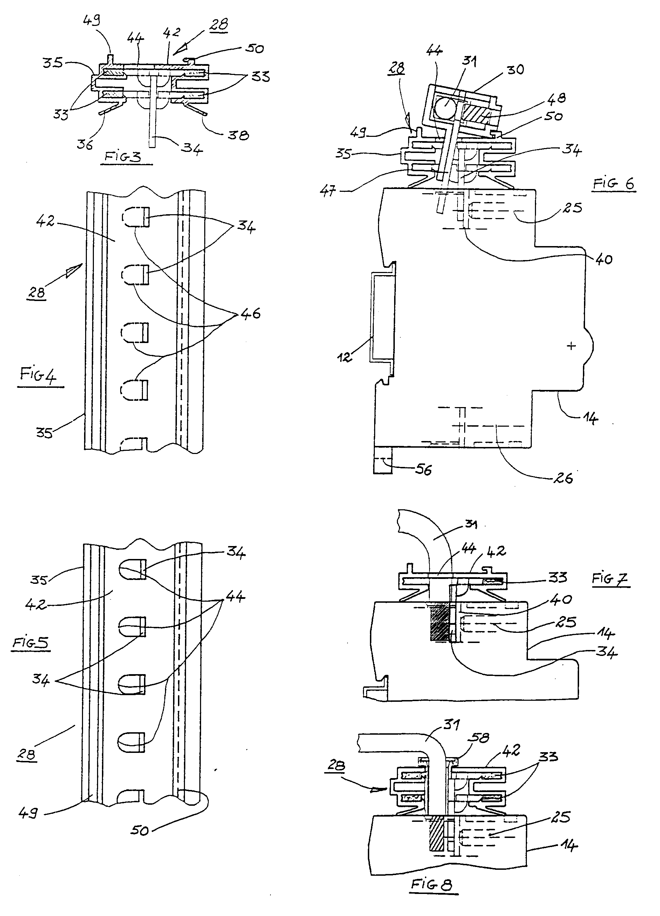

Sur les figures 1 et 2, une pluralité d'appareils électriques modulaires 10, notamment des disjoncteurs, interrupteurs, contacteurs ou coupe-circuits à fusibles, sont juxtaposés par encliquetage sur un rail support 12, notamment à profil DIN symétrique. Les appareils 10 sont accolés par leurs grandes faces latérales pour former une rangée horizontale s'étendant selon la direction du rail 12.

Chaque appareil modulaire 10 comporte un boîtier 14 isolant moulé de forme parallélépipédique, renfermant le mécanisme de coupure et de protection (non représenté), et une manette 16 de commande manuelle, laquelle fait saillie d'un orifice de la face avant 18. Les faces latérales opposées étroites 20, 22 du boîtier 14 sont équipées respectivement d'une borne d'entrée 24 et d'une borne de sortie 26 pour autoriser le branchement électrique de l'appareil 10. Les bornes 24, 26 sont du type à cage et vis de serrage 25 (montrée en pointillé sur la figure 2).

L'ensemble des bornes d'entrée 24 sont reliées à un peigne de raccordement 28 agencé pour former un jeu de barres monobloc d'alimentation en parallèle des différents appareils 10. La liaison électrique du peigne avec le disjoncteur de tête (non représenté) s'effectue au moyen d'un connecteur 30 à câble d'alimentation 31.

La borne de sortie 26 de chaque appareil 10 est raccordée par un câble de liaison 32 à un départ.

Sur les figures 1 et 2, les appareils 10 sont constitués par des disjoncteurs unipolaires, et le peigne 28 possède une seule barre conductrice 33 équipée d'une pluralité de languettes (34, fig. 2) en forme de dents, engagées dans les cages des bornes 24. L'écartement entre les languettes 34 successives correspond au pas des appareils 10 unipolaires, c'est-à-dire 18 mm. Cet écartement est doublé, triplé et quadruplé lors d'une alimentation d'appareils bipolaires, tripolaires ou tétrapolaires.

Le peigne 28 (montré en détail à la figure 3), comporte une gaine profilée 35, en matériau isolant plastique, ayant quatre cavités pour le logement des barres conductrices 33 d'alimentation. Dans le cas d'une alimentation d'appareils bipolaires, deux barres 33 sont insérées dans la gaine 35. Pour des appareils tripolaires et tétrapolaires, le peigne 28 est doté respectivement de trois et quatre barres 33. L'ensemble gaine isolante 35 et barres 33 en cuivre, confèrent une certaine rigidité à la structure monobloc isolée du peigne 28, lequel prend appui sur la face 20 des appareils 10 au moyen d'une paire de lèvres élastiques 36, 38 en forme de jupes faisant partie intégrante de la gaine 35 isolante. Les languettes 34, de sections rectangulaires, sont déformées par pliage en équerre pour s'étendre selon une direction longitudinale perpendiculaire à celle de la barre 33 associée. En position raccordée du peigne 28 d'alimentation (voir figure 2), les languettes 34 viennent en contact dans les cages des bornes 24 avec les plages de contact 40 correspondantes (en pointillé) des appareils 10. Le serrage entre les languettes 34 et les plages de contact 40 est assuré par les vis 25 des bornes d'entrée 24. Les lèvres 36, 38 s'étendent dans un intervalle ou jeu "J" ménagé entre la gaine 35 et le boîtier 14.

A l'opposé des lèvres 36, 38, la face supérieure 42 de la gaine 35 profilée du peigne 38 est pourvue d'une pluralité d'organes de passage de moyens de raccordement. Ces organes de passage sont formés par des orifices 44 (fig. 5) ou des prédécoupes 46 (fig. 4) brisables, échelonnés à intervalles réguliers le long de la gaine 35. L'écartement entre deux orifices 44 successifs de la gaine 35 correspond sensiblement au pas des appareils 10 unipolaires. Dans la rangée, l'ensemble des orifices est situé en face des cages des bornes 24.

Les languettes 34 successives des barres 33 conductrices sont logées dans un même plan perpendiculaire à la paroi interne de la face 42. Les extrémités des languettes 33 font saillie de la gaine 35 du côté des lèvres 36, 38, et sont alignées selon un même niveau, ce qui impose que les languettes 34 des deux barres 33 supérieures présentent une longueur supérieure à celle des languettes 34 des deux barres 33 inférieures.

On se référant aux figures 4 et 5, on remarque que le plan des languettes 34 passe au voisinage du bord rectiligne des orifices 44 correspondants, pour ne pas entraver le passage des organes de raccordement de l'arrivée à travers les orifices 44 du peigne 28 et les cages des bornes 24 des appareils 10.

Sur les figures 2 et 6, l'arrivée du câble d'alimentation 31 du peigne 28 s'effectue par l'intermédiaire du connecteur 30, dont le corps isolant est assujetti à la face supérieure de la gaine 35. Le connecteur 30 comporte un doigt de contact 47 destiné à s'engager dans l'orifice 44 de la gaine 35 pour la venue en engagement avec la languette 34 du peigne 28. Dans le connecteur 30, le serrage du câble d'alimentation 31 contre la partie supérieure du doigt de contact 47 s'opère au moyen d'une cage associée à une vis ou un ressort 48. Les moyens de retenue du connecteur 30 sur le peigne 28 comportent un taquet d'arrêt 49 et une rainure en forme de crochet 50 faisant saillie de la face supérieure 42 de la gaine 35 (fig. 3). Sur la figure 6, l'introduction en biais du connecteur 30 dans l'orifice 40 et la cage de la borne 24, assure d'abord l'accrochage de la base du connecteur 30 au crochet 50. Un léger mouvement de pivotement dans le sens inverse des aiguilles d'une montre applique ensuite le doigt de contact 47 contre la languette 34 et contre la face supérieure 42 de la gaine 35 avec maintien par le taquet d'arrêt 49 (fig. 2). Le serrage définitif est obtenu au moyen de la cage et de la vis 25 de la borne d'entrée 24, la languette 34 du peigne 28 étant alors intercalée entre la plage de contact 40 de l'appareil 10 et le doigt de contact 47 du connecteur 30.

L'encliquetage de l'appareil 10 sur le rail support 12 s'opère au moyen d'un verrou 52 en forme de coulisseau ayant un talon de préhension 56 et un bec d'accrochage 54 (voir fig. 2).

Sur la figure 7, l'arrivée du câble d'alimentation 31 s'effectue sans utilisation de connecteur 30. L'extrémité du câble 31 est introduite directement par l'orifice 44 d'un peigne 28 unipolaire à une barre 33, et l'extrémité dénudée du câble 31 est insérée entre la cage (non représentée) de la borne 24, et la languette 34 du peigne 28.

En référence à la figure 8, l'arrivée directe du câble 31 sur le peigne 28 passe par un embout 58 isolant traversant l'orifice 44 de la gaine 35 dans l'alignement avec la cage de la borne 24.

Dans les trois modes de raccordement des fig. 6 à 8, utilisant un peigne 28 commun de pontage des appareils 10 de la rangée, le décalage transversal d'un orifice 44 par rapport à la languette 34 correspondante ménage un espace libre dans le peigne 28 pour l'introduction directe du câble d'alimentation 31 (fig. 7 et 8) ou indirecte par l'intermédiaire d'un connecteur 30 (fig. 6). L'endroit de raccordement peut être choisi par l'électricien en un point quelconque de la rangée.

Les figures 9 à 13 illustrent un procédé économique de fabrication des barres 33 du peigne 28 de pontage. Deux barres 33 sont fabriquées simultanément par découpage imbriqué dans une bande 60 plane de cuivre (voir fig. 9 à 12). La largeur "1" de cette bande 60 est constante (de l'ordre de 30,7 mm), indépendamment de la nature bipolaire, tripolaire ou tétrapolaire du peigne 28. Des découpes 62 pratiquées dans chaque bande 60 par une poinçonneuse automatique font apparaître les languettes 34 associées à deux bandes 33 d'épaisseurs constantes. Les languettes 34 imbriquées se trouvent dans la partie centrale de la bande 60, tandis que les deux barres 33 s'étendent le long des bords opposés de la bande 60, de part et d'autre des languettes 34.

Le décalage longitudinal entre deux languettes 34 successives d'une même barre 33 est croissant selon que le peigne 28 équipe un appareil 10 bipolaire (fig. 9), tripolaire (fig. 10) et tétrapolaire (fig. 11 et 12).

Ce procédé de découpage imbriqué de deux barres 33 dans une même bande 60 permet de réduire les chutes, et il en résulte un gain notable de cuivre. L'ensemble des languettes s'étend parallèlement aux deux barres 33.

La figure 13 montre le procédé de pliage des languettes 34 d'une barre 33. La phase A représente schématiquement la languette 34 aprés découpe. La languette 34 est alors coplanaire avec la barre 33 et comporte une première portion 64 d'extrémité s'étendant parallèlement à une deuxième portion 66 intermédiaire. Les première et deuxième portions 64, 66 sont interconnectées par une première liaison 68 transversale, perpendiculaire à la barre 33. La portion 66 intermédiaire est raccordée à la barre 33 par une deuxième liaison 70 parallèle à la première liaison 68.

Durant la phase B est opéré un premier pliage en équerre vers le haut de la première liaison 68 autour d'une génératrice X parallèle à la barre 33.

Dans la phase C, un deuxième pliage en équerre vers le bas de la deuxième liaison 70 autour d'une génératrice Y orthogonale à la barre 33, amène finalement la première portion 64 dans un plan perpendiculaire à celui de la barre 33 associée. Dans le premier pliage autour de l'axe X, la première liaison 68 pourrait être déformée de 90 degrés vers le bas, et on obtiendrait alors les languettes 34 représentées dans les phases D et E.

## Revendications

1. Dispositif de raccordement pour des appareils électriques (10) modulaires disposés côte-à-côte selon une rangée sur un rail support (12) profilé et ayant une série de bornes d'entrée (24) latérales échelonnées suivant la direction longitudinale de la rangée, ledit dispositif de raccordement comportant :
- un peigne (28) de pontage ayant une gaine (35) profilée en matériau isolant renfermant au moins une barre (33) conductrice de section rectangulaire, parallèle au rail support (12) et équipée d'une pluralité de languettes (34) de sections rectangulaires en forme de dents, s'étendant parallèlement dans un même plan avec un décalage longitudinal prédéterminé, et susceptibles de coopérer avec la série de bornes d'entrée (24),
- et des moyens de raccordement aux appareils électriques modulaires et au peigne (28) de pontage des appareils (10), caractérisé en ce que la gaine (35) isolante du peigne (28) est pourvue d'une pluralité d'orifices (44) situés à intervalles réguliers le long de la direction longitudinale en face des bornes d'entrée (24), et que le plan des languettes (34) passe au voisinage de l'un des bords des orifices (44) pour ménager un espace libre autorisant le passage des moyens de raccordement à travers la gaine (35), et la liaison électrique commune avec les languettes (34) du peigne (28) à l'intérieur des bornes d'entrée (24) correspondantes.

2. Dispositif de raccordement selon la revendication 1, caractérisé en ce que les orifices (44) sont conformés à partir de prédécoupes (46), brisables, pratiquées dans la face supérieure (42) de la gaine (35), perpendiculaire aux languettes (34).

3. Dispositif de raccordement selon la revendication 2, caractérisé en ce que l'intervalle entre deux prédécoupes (46) successives de la gaine (35) correspond sensiblement au pas d'appareils (10) unipolaires.

4. Dispositif de raccordement selon l'une des revendications 1 à 3, caractérisé en ce que les moyens additionnels de raccordement comportent un connecteur (30) par phase fixé mécaniquement au droit d'un orifice (44) prédéterminé de la gaine (35) du peigne (28), le connecteur (30) étant équipé d'un doigt de contact (47) traversant ledit orifice (44) en venant en contact avec une languette (34) de la phase correspondante.

5. Dispositif de raccordement selon la revendication 4, caractérisé en ce que la fixation du connecteur (30) sur le peigne (28) intervient au moyen d'organes de retenue comprenant un taquet d'arrêt (49) et une rainure en forme de crochet (50) faisant saillie de la face supérieure (42) externe de la gaine (35).

6. Dispositif de raccordement selon l'une des revendications 1 à 5, dans lequel chaque borne d'entrée (24) comprend une cage et vis de fixation (25) coopérant avec une plage de contact (40) de l'appareil (10), caractérisé en ce que la forme des orifices (44) ou prédécoupes (46) de la gaine (35) correspond sensiblement à celle des cages des bornes d'entrée (24).

7. Dispositif de raccordement selon l'une des revendications 1, 2, 3 et 6, caractérisé en ce que les moyens de raccordement comportent une arrivée directe par phase au moyen d'un câble (31) traversant un orifice (44) correspondant de la gaine (35).

## Claims

1. A device for connecting modular electrical switchgear (10) arranged side by side in a row on a profiled support rail (12) and having a series of lateral input terminals (24) staggered in the longitudinal direction of the row, said connection device comprising :
- a bridging comb (28) having a profiled sheath (35) made of insulating material housing at least one conducting bar (33) of rectangular cross section, parallel to the support rail (12) and equipped with a plurality of tabs (34) of rectangular cross sections in the form of teeth, extending parallel in the same plane with a predetermined longitudinal stagger, and designed to cooperate with the series of input terminals (24),
- and means for connecting to the modular electrical switchgear (10) and to the bridging comb (28) of the switchgear devices (10), characterized in that the insulating sheath (35) of the comb (28) is provided with a plurality of orifices (44) located at regular intervals along the longitudinal direction facing the input terminals (24), and that the plane of the tabs (34) passes close to one of the edges of the orifices (44) to provide a free space enabling the connecting means to pass through the sheath (35) and enabling common electrical connection with the tabs (34) of the comb (28) inside the corresponding input terminals (24).

2. The connecting device according to claim 1, characterized in that the orifices (44) are shaped from breakable pre-cutouts (46), made in the upper face (42) of the sheath (35), perpendicular to the tabs (34).

3. The connecting device according to claim 2, characterized in that the distance between two successive pre-cutouts (46) of the sheath (35) corresponds appreciably to the pitch of single-pole switchgear devices (10).

4. The connecting device according to claim 1, characterized in that the connecting means comprise a connector (30) per phase mechanically fixed to the right of a predetermined orifice (44) of the sheath (35) of the comb (28), the connector (30) being equipped with a contact finger (47) passing through said orifice (44) and coming into contact with a tab (34) of the corresponding phase.

5. The connecting device according to claim 4, characterized in that fixing of the connector (30) onto the comb (28) is achieved by means of securing components comprising a stop lug (49) and a groove in the form of a hook (50) protruding out from the external upper face (42) of the sheath (35).

6. The connecting device according to one of the claims 1 to 5, wherein each input terminal (24) comprises a tunnel and fixing screw (25) cooperating with a contact terminal strip (40) of the switchgear device (10), characterized in that the shape of the orifices (44) or pre-cutouts (46) of the sheath (35) corresponds appreciably to that of the tunnels of the input terminals (24).

7. The connecting device according to one of the claims 1, 2, 3 and 6, characterized in that the connecting means comprise a direct input per phase by means of a cable (31) passing through a corresponding orifice (44) of the sheath (35).

## Patentansprüche

1. Vorrichtung zur Verbindung von modularen Schaltgeräten (10), die auf einer Profiltragschiene (12) aneinandergereiht sind und eine Reihe von entlang der Längsachse der Schalterreihe angeordneten seitlichen Eingangsklemmen (24) aufweisen, wobei die Verbindungsvorrichtung folgende Teile umfaßt:
- eine Kammschiene (28) mit einem Isolierstoff-Profilmantel (35), der mindestens eine Stromschiene (33) mit rechteckigem Querschnitt umschließt, parallel zur Tragschiene (12) verläuft und über mehrere zahnförmige Laschen (34) mit rechteckigem Querschnitt verfügt, die mit einem festgelegten Längsversatz parallel in einer Ebene verlaufen und mit den Eingangsklemmen (24) zusammenwirken,
- und Mittel zum Anschluß an die modularen Schaltgeräte sowie die Kammschiene (28) der Schaltgeräte, dadurch gekennzeichnet, daß der Isolierstoffmantel (35) der Kammschiene (28) in regelmäßigen Abständen mit mehreren Öffnungen (44) versehen ist, die entlang der Längsachse gegenüber den Eingangsklemmen (24) angeordnet sind, und daß die Zähne (34) in einer Ebene direkt neben einem Rand der Öffnungen (44) angeordnet sind, so daß ein Freiraum für die Durchführung der Anschlußmittel durch den Isolierstoffmantel (35) und für die gemeinsame elektrische Verbindung mit den Zähnen (34) der Kammschiene (28) im Inneren der entsprechenden Eingangsklemmen (24) verbleibt.

2. Verbindungsvorrichtung nach Anspruch 1, dadurch gekennzeichnet, daß die Öffnungen (44) durch Ausbrechen vorgestanzter Löcher (46) in der senkrecht zu den Zähnen (34) verlaufenden Oberseite (42) des Isolierstoffmantels (35) ausgebildet werden.

3. Verbindungsvorrichtung nach Anspruch 2, dadurch gekennzeichnet, daß der Abstand zwischen zwei benachbarten vorgestanzten Löchern (46) des Isolierstoffmantels (35) ungefähr dem Rastermaß einpoliger Schaltgeräte (10) entspricht.

4. Verbindungsvorrichtung nach einem der Ansprüche 1 bis 3, dadurch gekennzeichnet, daß die zusätzlichen Auschlußmittel über einen Anschlußverbinder (30) pro Phase verfügen, der im rechten Winkel zu einer bestimmten, im Mantel (35) der Kammschiene (28) ausgebildeten Öffnung (44) befestigt wird, wobei der Anschlußverbinder (30) über einen Kontaktstift (47) verfügt, der durch die Öffnung (44) ragt und dabei in Kontakt mit dem Zahn (34) der entsprechenden Phase gelangt.

5. Verbindungsvorrichtung nach Anspruch 4, dadurch gekennzeichnet, daß die Befestigung des Anschlußverbinders (30) auf der Kammschiene (28) durch Befestigungselemente erfolgt, die einen Anschlag (49) und einen mit einer Nut versehenen Führungssteg (50) auf der Oberseite (42) des Mantels (35) umfassen.

6. Verbindungsvorrichtung nach einem der Ansprüche 1 bis 5, in der jede Eingangsklemme (24) einen Käfig und eine Befestigungsschraube (25) umfaßt, die mit einer Anschlußschiene (40) des Schaltgeräts (10) zusammenwirken, dadurch gekennzeichnet, daß die Form der Öffnungen (44) oder der vorgestanzten Löcher (46) des Mantels (35) ungefähr derjenigen der Käfige der Eingangsklemmen (24) entspricht.

7. Verbindungsvorrichtung nach einem der Ansprüche 1, 2, 3 und 6, dadurch gekennzeichnet, daß die Anschlußmittel über eine direkte Einspeisung pro Phase mit Hilfe eines Kabels (31) verfügen, das durch eine entsprechende Öffnung (44) des Mantels (35) geführt wird.
